# EUROPEAN PATENT APPLICATION

(11) **EP 4 703 955 A1**
(43) Date of publication of application: **04.03.2026**
(21) Application number: 24197389.0
(22) Date of filing: 29.08.2024
(51) Int. Cl.: G06F 30/20, G06F 1/3206, G06F 1/324, G06F 9/50, G06F 17/11, G06F 119/06

(54) **SYSTEM AND METHOD FOR MANAGING ENERGY CONSUMPTION AND TIME-TO-SOLUTION IN EXECUTION OF SOLVERS**

(71) Applicant: Siemens Aktiengesellschaft, 80333 München (DE)
(72) Inventor: MITRA, Sayantan, 700094 Kolkata, West Bengal (IN); SANFUI, Subhajit, 560068 Bangalore, Karnataka (IN)
(74) Representative: HKW Intellectual Property PartG mbB

(57) **Abstract**

Disclosed is a method (100) for managing energy consumption and time-to-solution in execution of solvers. The method includes executing a solver using a solver method on a hardware platform. The method further includes measuring energy consumption and time-to-solution of the solver method on the hardware platform during execution of the solver. The method further includes determining a set of non-dominated solver method-hardware platform pairs based on the measured energy consumption and time-to-solution. Herein, each non-dominated solver method-hardware platform pair represents a trade-off between minimizing energy consumption and minimizing time-to-solution without affecting accuracy of the solver. The method further includes configuring the hardware platform to execute the solver using one of the solver method-hardware platform pairs from the non-dominated solver method-hardware platform pairs.

## Description

The present invention relates to the field of scientific computing, and more particularly to a system and method for managing energy consumption and time-to-solution trade-offs in the execution of solvers on hardware platforms.

Scientific computing, as implemented for scientific simulations and artificial intelligence (AI) applications, is an important tool for studying complex systems and making important predictions. In fields of scientific computing and complex problem-solving, solvers are implemented for finding solutions to various mathematical and computational challenges. These solvers are typically executed on different hardware platforms, such as central processing units (CPUs), graphics processing units (GPUs), field-programmable gate arrays (FPGAs), and application-specific integrated circuits (ASICs). For real use cases, simulations are computationally expensive and can consume a lot of energy, especially for large-scale problems. To mitigate this issue, two approaches can be taken, (a) designing energy-efficient hardware and (b) developing simulation software that consumes less energy while maintaining result accuracy. Both approaches are essential, and their importance increases as the era of exascale computing approaches.

For instance, scientific simulations rely on a central solver or a combination of solvers to tackle complex problems. However, selecting the appropriate solver(s) from a range of options is important. Several factors may need to be considered, such as the (a) suitability of the solver for the given problem, (b) the required level of accuracy, (c) the expected time-to-solution, and (d) compatibility with the target hardware. By carefully evaluating these criteria, a user can make informed decisions and optimize their simulations for optimal performance. Among the four factors mentioned, the solver accuracy is typically the most important when it comes to industrial applications. However, it is important to note that, without sacrificing accuracy, the other factors can be varied to select an optimum solver technique, that can lead to both a sustainable and a cost-effective solution.

Traditionally, the focus has been on minimizing the time-to-solution, which refers to the duration required for a solver to complete its task. However, with increasing concerns about energy consumption and its environmental impact, there is a growing recognition of the importance of managing energy usage in computational processes. In particular, with a growing need for higher fidelity simulations, it is important to select a solver which is energy efficient. It is also required to optimize relevant software and hardware parameters based on the trade-off between solution time and energy consumption without sacrificing result accuracy. This dual objective of minimizing both time-to-solution and energy consumption presents a challenge, as these goals can often be conflicting.

To prepare for this, simulation software developers need to optimize their software to minimize energy consumption while maintaining result accuracy and improved performance. Furthermore, given a defined accuracy requirement, the end users also need the freedom to choose between either a fast time-to-solution that may consume higher amount of energy or a relatively slower time-to-solution that is energy efficient. Moreover, given the vastly varying architecture of different computing hardware, the same solver method can behave differently for the same problem on different hardware in terms of energy consumed and time-to-solution. Lastly, varying different solver parameters may lead to different computing patterns, which in turn may cause significant variation in energy consumed and execution time. The trade-offs between time-to-solution and energy consumption for a set of varying parameters can be useful for the end user.

Thus, it becomes important to understand the relationship of energy consumption with variation of time-to-solution, without sacrificing accuracy. For the end-customer, these requirements can stem from either meeting their individual sustainability goals or the requirement to cut down on energy costs. Thus, the energy consumption of simulation software is a growingly important issue that needs to be understood and addressed to ensure that scientific simulation remains a viable tool in the future. Current approaches often lack a systematic way to evaluate and optimize these choices while maintaining the accuracy of the solver. Specifically, current solver selection methodology does not consider the solver energy consumption as a viable criterion for selecting the solver.

Conventional research in the field of energy-efficient computing for scientific simulations has primarily focused on optimizing specific types of solvers, particularly linear system solvers. These studies have explored various strategies to reduce energy consumption while maintaining computational performance. For instance, research has investigated the use of dynamic voltage and frequency scaling (DVFS) in combination with low-power states to achieve energy reduction in iterative linear solvers for sparse systems. Other approaches have examined the potential of reduced-precision arithmetic and iterative refinement techniques to improve both performance and energy efficiency in dense linear system solvers.

While these studies have made significant contributions to understanding energy consumption patterns in specific solver types, they have generally not addressed the broader scope of managing energy consumption and time-to-solution across different solver methods and hardware platforms. Additionally, the focus has largely been on reducing energy consumption through various optimization techniques, rather than providing a comprehensive approach for analysing and selecting optimal solver method-hardware platform combinations based on energy consumption and time-to-solution trade-offs. Furthermore, existing research has not extensively explored the application of these energy-aware strategies to end-to-end scientific computing workflows or to a wide range of solver types beyond linear systems.

Therefore, there is a need for a method that can effectively manage the trade-off between energy consumption and time-to-solution in the execution of all types of solvers, while ensuring that the accuracy of the results is not compromised. The present invention seeks to address these issues by providing a methodology to incorporate energy consumption (EC) and time-to-solution (TTS) trade-offs for a fixed accuracy requirement into future simulation software. This can be used to provide the end-user with an optimal set of target hardware and solver method combination based on the conflicting objectives of EC and TTS. Furthermore, a set of available choices for relevant software and hardware parameters will also be provided. Based on the choices provided, an end-user can make an informed decision depending on their TTS requirement and EC goals.

The object of the present invention is achieved by a computer-implemented method for managing energy consumption and time-to-solution in execution of solvers. The method employs a processing unit to execute a series of steps that optimize the performance of solver methods on hardware platforms. The method includes executing a solver using a solver method on a hardware platform. The method further includes measuring energy consumption and time-to-solution of the solver method on the hardware platform during execution of the solver. The method further includes determining a set of non-dominated solver method-hardware platform pairs based on the measured energy consumption and time-to-solution. Herein, each non-dominated solver method-hardware platform pair represents a trade-off between minimizing energy consumption and minimizing time-to-solution without affecting accuracy of the solver. The method further includes configuring the hardware platform to execute the solver using one of the solver method-hardware platform pairs from the non-dominated solver method-hardware platform pairs.

In one or more embodiments, determining the set of non-dominated solver method-hardware platform pairs comprises identifying a set of applicable solver methods from a plurality of solver methods based on the solver to be executed. This process also comprises plotting the measured energy consumption and time-to-solution for each applicable solver method when executed on the hardware platform. This process further comprises identifying a set of dominated solver method-hardware platform pairs. Herein, each dominated solver method-hardware platform pair has higher energy consumption and higher time-to-solution than at least one other solver method-hardware platform pair. This process further comprises identifying the solver method-hardware platform pairs excluding the set of dominated solver method-hardware platform pairs as the set of non-dominated solver method-hardware platform pairs.

In one or more embodiments, the method also comprises providing an interface to receive, from a user, a selection of a solver method-hardware platform pair from the set of non-dominated solver method-hardware platform pairs. The method further comprises identifying, by the processing unit, a set of software parameters associated with the selected solver method-hardware platform pair, wherein varying the set of software parameters results in different energy consumption and time-to-solution trade-offs. The method further comprises outputting, via the interface, the different energy consumption and time-to-solution trade-offs corresponding to the set of software parameters.

In one or more embodiments, the method also comprises providing an interface to receive, from a user, a selection of a solver method-hardware platform pair from the set of non-dominated solver method-hardware platform pairs. The method further comprises identifying, by the processing unit, a set of hardware parameters associated with the selected solver method-hardware platform pair. Herein, varying the set of hardware parameters results in different energy consumption and time-to-solution trade-offs. The method further comprises outputting, via the interface, the different energy consumption and time-to-solution trade-offs corresponding to the set of hardware parameters.

In one or more embodiments, the method also comprises implementing the processing unit for classifying the solver method as one of compute-bound and memory-bound based on one or more of compute and memory access patterns during execution of the solver while using thereof; and recommending adjusting at least one of compute clock frequency, memory clock frequency, graphic clock frequency and thermal design power (TDP) based on the classification of the solver method.

In one or more embodiments, the method also comprises implementing the processing unit for performing the executing, measuring, and determining steps for a plurality of problem classes and problem sizes of solvers; and generating a database of non-dominated solver method-hardware platform pairs for different combinations of problem classes and problem sizes.

In one or more embodiments, the hardware platforms comprise at least one of a central processing unit (CPU), a graphics processing unit (GPU), a field-programmable gate array (FPGA), and an application-specific integrated circuit (ASIC).

In one or more embodiments, the method also comprises presenting the set of non-dominated solver method-hardware platform pairs along with the energy consumption and time-to-solution data in a graphical format.

The object of the present invention is also achieved by a system comprising one or more processing units and a memory unit communicatively coupled to the one or more processing units. Herein, the memory unit comprises a solver optimization module stored in the form of machine-readable instructions executable by the one or more processing units. Herein, the solver optimization module is configured to perform aforementioned method steps for managing energy consumption and time-to-solution in execution of solvers.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention.

Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for managing energy consumption and time-to-solution in execution of solvers, in accordance with one or more embodiments of the present invention;
FIG 2 is a block diagram representation of a system for managing energy consumption and time-to-solution in execution of solvers, in accordance with one or more embodiments of the present invention;
FIG 3 is a graphical user interface (GUI) showing a measured energy consumption and time-to-solution for each applicable solver method when executed on a hardware platform, in accordance with one or more embodiments of the present invention;
FIG 4 is a GUI showing a plot for determining a set of non-dominated solver method-hardware platform pairs based on measured energy consumption and time-to-solution, in accordance with one or more embodiments of the present invention;
FIG 5 is a GUI showing an exemplary flowchart listing different strategies for reducing compute and memory clock frequencies for compute-bound and memory-bound solvers for reference of a user, in accordance with one or more embodiments of the present invention;
FIG 6 is a GUI showing a graph of an instantaneous power consumption versus thermal design power (TDP) for an example scientific application, in accordance with one or more embodiments of the present invention;
FIG 7 is a GUI showing a graph of instantaneous power consumption plotted over time for solving a linear system from a benchmark circuit simulation problem using two different solvers, in accordance with one or more embodiments of the present invention;
FIG 8 is a GUI showing a graph of an EC (Energy Consumption) and TTS (Time-to-Solution), in accordance with one or more embodiments of the present invention;
FIGS 9A-9C are GUIs showing graphs of instantaneous power draw plots for three configurations presented in FIG 8, in accordance with one or more embodiments of the present invention;
FIG 10 is a GUI showing a schematic representation of an exemplary benchmark problem domain involving two sets of reactants, in accordance with one or more embodiments of the present invention;
FIGS 11A-11B are GUIs showing graphs for different configurations considered and their corresponding positions on the EC-TTS plot for the exemplary benchmark of FIG 10, in accordance with one or more embodiments of the present invention;
FIGS 12A-12D are GUIs showing graphs for instantaneous power for different TDP configurations, in accordance with one or more embodiments of the present invention; and
FIGS 13A-13D are GUIs showing graphs for instantaneous power for different SM clock configurations, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for managing energy consumption and time-to-solution in execution of solvers are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In the present context, "solvers" refer to computational algorithms or procedures designed to find solutions to specific problems or classes of problems. These solvers are utilized in various fields, including scientific simulations and artificial intelligence (AI). For instance, scientific simulation solvers are algorithms that model and solve complex physical, chemical, or biological phenomena. These solvers may include, but are not limited to, linear system solvers, flow solvers, pressure solvers, and chemistry solvers. Such solvers are implemented in simulating real-world processes, predicting outcomes, and advancing scientific understanding across numerous disciplines. AI solvers, on the other hand, include algorithms used in machine learning, optimization, and decision-making processes. These may include neural network training algorithms, reinforcement learning solvers, genetic algorithms, and various optimization solvers used in AI applications. AI solvers are employed in tasks such as pattern recognition, natural language processing, and autonomous decision-making systems.

These solvers often require significant computational resources and can be computationally intensive, making them relevant subjects for energy consumption and time-to-solution optimization. Herein, the "energy consumption" refers to the amount of electrical energy used by the hardware platform while executing the solver method, and the "time-to-solution" refers to the total time taken by the solver method to complete its task and arrive at a solution. The execution of these solvers on various hardware platforms, such as central processing units (CPUs), graphics processing units (GPUs), field-programmable gate arrays (FPGAs), and application-specific integrated circuits (ASICs), presents a complex landscape of performance characteristics. Each combination of solver method and hardware platform may provide different trade-offs between energy consumption and time-to-solution, which are important factors in the overall efficiency and cost-effectiveness of computational processes.

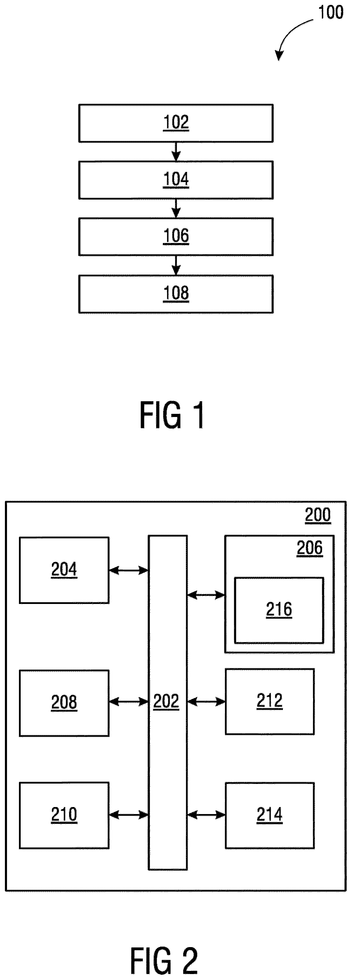

Referring to FIG 1, illustrated is a flowchart of a method (as represented by reference numeral 100) for managing energy consumption and time-to-solution in execution of solvers, in accordance with an embodiment of the present invention. The method 100 enables the identification of non-dominated solver method-hardware platform pairs, representing optimal trade-offs between energy efficiency and solution speed, while maintaining the accuracy of the solver results. Thereby, the method 100 aims to enhance the overall efficiency of computational processes in scientific and AI applications, potentially leading to reduced energy costs, improved resource utilization, and accelerated problem-solving capabilities.

Referring to FIG 2, illustrated is a block diagram of a system 200 for managing energy consumption and time-to-solution in execution of solvers, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for managing energy consumption and time-to-solution in execution of solvers. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for managing energy consumption and time-to-solution in execution of solvers. In particular, the memory unit 206 includes a solver optimization module 216 to perform steps for the said purpose.

Referring to FIGS 1-2 in combination, various steps of the method 100 (as described hereinafter), which may be executed in the system 200, or specifically in the processing unit 204 of the system 200, for managing energy consumption and time-to-solution in execution of solvers, are described. The method 100 employs the processing unit 204 to execute a series of steps that optimize the performance of solver methods on hardware platforms. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes executing a solver using a solver method on a hardware platform. As discussed, the solver refers to a computational algorithm designed to address a specific problem or class of problems, such as those encountered in scientific simulations or artificial intelligence applications. The solver method represents the particular implementation or approach used by the solver, which may vary depending on the nature of the problem and the desired solution characteristics. The hardware platform on which the solver is executed can be any suitable computational device or system, including but not limited to central processing units (CPUs), graphics processing units (GPUs), field-programmable gate arrays (FPGAs), and application-specific integrated circuits (ASICs). Each of these hardware platforms has its own characteristics in terms of processing capabilities, energy consumption patterns, and suitability for different types of computational tasks.

At step 104, the method 100 includes measuring energy consumption and time-to-solution of the solver method on the hardware platform during execution of the solver. As discussed, the energy consumption refers to the amount of electrical energy used by the hardware platform while executing the solver method. This measurement is typically performed using power monitoring capabilities built into modern hardware or through external power measurement devices. The method 100 may involve collecting instantaneous power consumption data at regular intervals throughout the execution of the solver. To calculate the total energy consumption, the instantaneous power consumption data may be multiplied with the corresponding time intervals and sums these values over the entire execution time of the solver. The time-to-solution, on the other hand, represents the total time taken by the solver method to complete the task and arrive at a solution. This measurement begins when the solver starts executing and ends when the solver produces the final output or reaches a predefined stopping criterion. The method 100 ensures that the time-to-solution measurement accounts for the actual computational time required by the solver method, excluding any non-essential overhead such as initialization time or data transfer time that is not intrinsic to the solution process.

At step 106, the method 100 includes determining a set of non-dominated solver method-hardware platform pairs based on the measured energy consumption and time-to-solution. This determination involves a multi-objective optimization approach. The method 100 involves first identifying a set of applicable solver methods from a pool of available methods, based on the specific solver to be executed. For each applicable solver method, the method 100 involves plotting the measured energy consumption and time-to-solution when executed on the hardware platform. This plotting step provides a visual representation of the performance characteristics of different solver methods. The method 100, then, involves identifying a set of dominated solver method-hardware platform pairs. Herein, each non-dominated solver method-hardware platform pair represents a trade-off between minimizing energy consumption and minimizing time-to-solution without affecting accuracy of the solver. A pair is considered dominated if there exists another pair that performs better in both energy consumption and time-to-solution. In other words, a dominated pair is one for which there is an alternative that is both more energy-efficient and faster. The method 100 excludes these dominated pairs from further consideration. The remaining solver method-hardware platform pairs, which are not dominated by any other pair, form the set of non-dominated pairs.

The importance of non-dominated solver method-hardware platform pairs (also, sometimes, referred to as Method-Target (M-T) pairs) is exemplified by linear system solvers, which are common in scientific computing applications. Various methods such as Conjugate gradients, Gauss-Seidel, and Least squares exhibit different performance characteristics across different target hardware platforms like CPUs, GPUs, and FPGAs. Not all combinations of methods and targets are optimal, as certain methods are better suited for specific hardware architectures. For instance, an insertion sort is more appropriate for a sequential CPU implementation, while a merge sort is better suited for massively parallel GPU implementations. Traditionally, M-T pairs are selected based on time-to-solution (TTS) requirements and the applicability of the method to the problem at hand.

The present invention proposes to incorporate energy consumption (EC) values in addition to TTS for the selection of the final M-T pair. This approach results in a set of non-dominated M-T pairs and a set of dominated M-T pairs when plotted on an EC-TTS graph. Herein, each M-T pair from the dominated set is worse in both objectives than at least one M-T pair from the non-dominated set. Each M-T pair from the non-dominated set is better in both objectives than any M-T pair from the dominated set. No M-T pair from the non-dominated set is better in both objectives than any other M-T pair from the non-dominated set. This, non-dominated pairs represent optimal trade-offs between EC and TTS, where improving one metric necessarily results in a deterioration of the other.

In the present invention, the process of determining the set of non-dominated solver method-hardware platform pairs involves several systematic steps. Initially, the method 100 involves identifying a set of applicable solver methods from a plurality of solver methods based on the solver to be executed. This identification process considers the specific requirements and characteristics of the problem, ensuring that only relevant and potentially effective solver methods are considered. The method 100 may use predefined criteria or heuristics to determine which solver methods are applicable to the given problem type. The method 100, then, proceeds to plot the measured energy consumption and time-to-solution for each applicable solver method when executed on the hardware platform. This plotting step creates a two-dimensional representation where each solver method-hardware platform pair is represented as a point, with energy consumption on one axis and time-to-solution on the other.

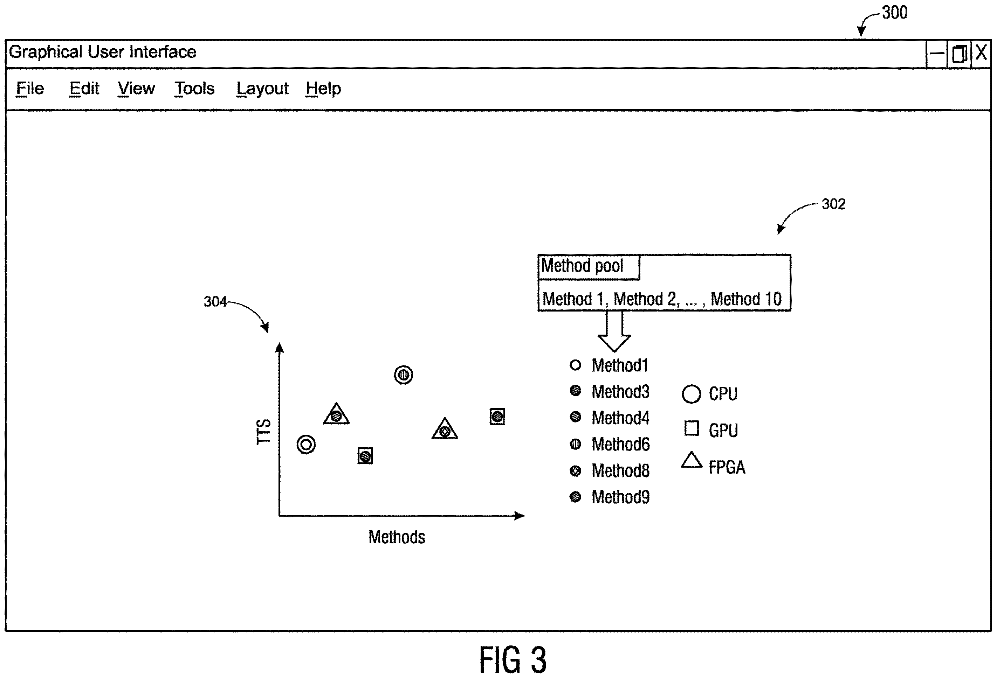

FIG 3 is a graphical user interface (GUI) 300 showing a plot for the measured energy consumption and time-to-solution for each applicable solver method when executed on the hardware platform. As shown, a method pool 302 containing multiple solver methods, labelled as Method 1, Method 2, up to Method 10, are provided. From this pool, suitable methods are selected based on their applicability to the problem at hand. The selected methods, shown as Method 1, Method 3, Method 4, Method 6, Method 8, and Method 9, are then plotted on a graph 304. The horizontal axis of the graph 304 represents the different methods, while the vertical axis represents TTS. Each method is represented by a point on the graph 304, with different shapes indicating the hardware platform used: circles for CPU, squares for GPU, and triangles for FPGA. The graph 304 demonstrates the trade-offs between different solver methods and hardware platforms in terms of time-to-solution. It is to be noted that accuracy is fixed for all cases, ensuring that the comparison is solely based on energy consumption and time-to-solution. In the present example, the combination of combination of Method 4 and GPU provides the optimal balance between energy consumption and time-to-solution for the given problem. This visual representation allows for a clear comparison of the performance characteristics of different solver methods on the given hardware platform.

Further, the process of determining the set of non-dominated solver method-hardware platform pairs involves identifying a set of dominated solver method-hardware platform pairs. A pair is considered dominated if there exists at least one other solver method-hardware platform pair that has both lower energy consumption and lower time-to-solution. In other words, for each dominated pair, there is another pair that performs better in both metrics simultaneously. This step involves comparing each pair with every other pair to determine if it is dominated. Finally, the method 100 involves identifying the solver method-hardware platform pairs that remain after excluding the set of dominated pairs. These remaining pairs constitute the set of non-dominated solver method-hardware platform pairs. Each pair in this set represents a unique trade-off between energy consumption and time-to-solution. This set of non-dominated pairs represent the optimal choices for balancing energy efficiency and solution speed for the given solver and hardware platform.

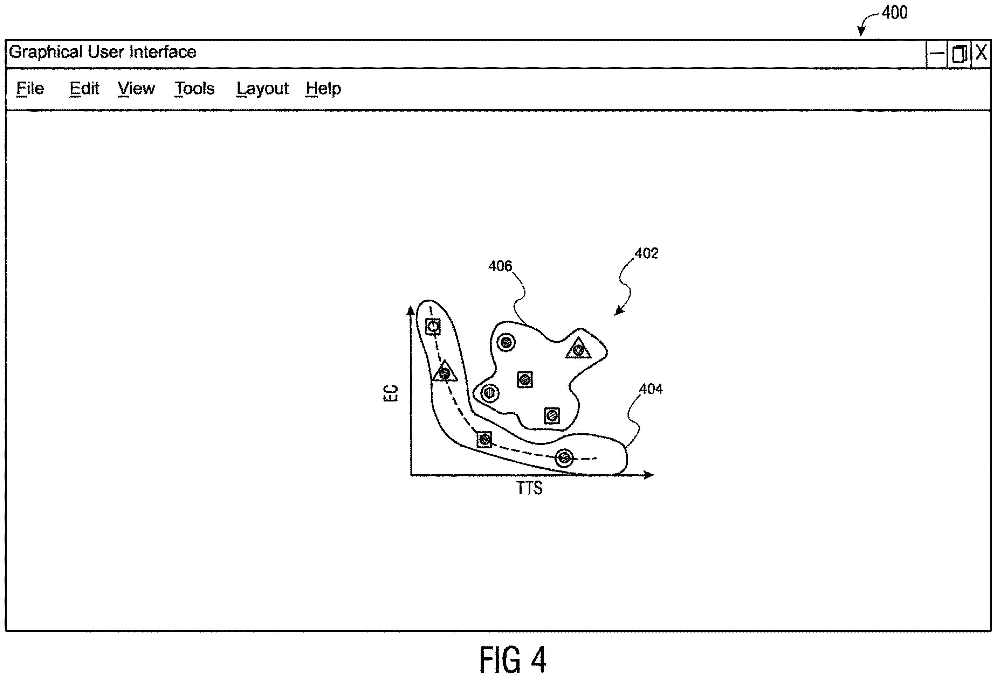

FIG 4 is a GUI 400 showing a plot for determining the set of non-dominated solver method-hardware platform pairs based on the measured energy consumption and time-to-solution. The said plot provides a two-dimensional graph 402 with TTS on the horizontal axis and EC on the vertical axis. Each point on the graph 402 represents a different solver method-hardware platform pair, with different shapes indicating the hardware platform used. The graph 402 is divided into two regions: a first region 404 representing the non-dominated pairs, and a second region 406 representing the dominated pairs. The first region 404, shown as a curved line along the edge of the second region 406, with the non-dominated pairs, represents the optimal trade-offs between energy consumption and time-to-solution. The solver method-hardware platform pairs in the second region 406 are dominated, as there exist pairs in the first region 404 that perform better in both energy consumption and time-to-solution. The graph 402 presents the set of non-dominated solver method-hardware platform pairs along with the energy consumption and time-to-solution data in a graphical format. This visualization aids in identifying the set of non-dominated pairs that provide the balance between energy efficiency and solution speed for the given solver and hardware platforms.

Referring back to FIG 1, at step 108, the method 100 includes configuring the hardware platform to execute the solver using one of the solver method-hardware platform pairs from the non-dominated solver method-hardware platform pairs. This configuration process involves selecting a specific solver method-hardware platform pair and adjusting the hardware platform settings to optimize the execution of the chosen solver method. Throughout this configuration process, the method 100 ensures that all settings and adjustments are made in a way that maintains the required level of solution accuracy while optimizing for the chosen balance between energy consumption and time-to-solution.

In an embodiment, the method 100 involves providing an interface (such as, the interface 208) for the selection of the solver method-hardware platform pair. This interface presents the set of non-dominated solver method-hardware platform pairs to the user (on a user device), along with relevant information such as energy consumption and time-to-solution metrics for each pair. The interface may include graphical representations, numerical data, or both, to aid the user in comparing and evaluating the different options. The user can then select the preferred solver method-hardware platform pair based on their specific requirements and priorities. Once the user makes a selection, the method 100 proceeds to configure the hardware platform accordingly.

In another embodiment, the method 100 involves selecting and applying a solver method-hardware platform pair automatically (without consulting the user) based on predefined criteria. These criteria may be established beforehand, possibly based on constraints or preferences specified by the user or system administrator. For example, the criteria may prioritize energy efficiency over speed, or vice versa, depending on the specific use case or organizational policies. In this case, the method 100 involves evaluating the non-dominated solver method-hardware platform pairs against these predefined criteria to automatically select the most suitable pair. Once selected, the method 100 proceeds to configure the hardware platform for the chosen pair without requiring further user intervention.

In some embodiments, after the selection of a specific solver method-hardware platform pair based on energy consumption and time-to-solution trade-offs, the method 100 includes classifying the solver method as one of compute-bound and memory-bound based on one or more of compute and memory access patterns during execution of the solver while using thereof. That is, the method 100 includes a step of classifying the solver method as either compute-bound or memory-bound based on the compute and memory access patterns observed during the execution of the solver. This classification process utilizes a compute fingerprinting module to collect relevant metrics. These metrics may include the number of memory transactions and their corresponding word sizes, the number of floating-point operations performed, and other pertinent data that characterize the computational behaviour of the solver method. To perform the classification, the method 100 involves analysing the collected metrics to determine whether the solver method spends the majority of execution time on computational operations or on memory access operations. If the solver method spends most of the time performing computations, such as arithmetic operations or logical calculations, the solver method is classified as compute-bound. Conversely, if the solver method spends the majority of time reading from or writing to memory, the solver method is classified as memory-bound.

The method 100, then, includes recommending adjusting at least one of compute clock frequency, memory clock frequency, graphic clock frequency and thermal design power (TDP) based on the classification of the solver method. That is, following the classification, the method 100 proceeds to recommend adjustments to hardware parameters based on the determined classification of the solver method. These recommendations aim to optimize energy consumption while maintaining solution accuracy. For compute-bound solver methods, the method 100 may involve recommending reducing the compute clock frequency of the hardware platform. This reduction can lead to energy savings with a potential increase in runtime. The method 100 may also suggest adjusting the memory clock frequency, as lowering it may reduce energy consumption without significantly impacting the runtime for compute-bound applications. For memory-bound solver methods, the method 100 may recommend different strategies. Lowering the compute clock frequency may reduce energy consumption without substantially affecting the runtime, as the solver method is primarily limited by memory operations. Adjusting the memory clock frequency for memory-bound applications requires careful consideration, as it can reduce energy consumption but may also increase runtime. Throughout these recommendations, the method 100 ensures that the proposed adjustments maintain the accuracy of the solver method. The goal is to achieve energy savings and optimize performance without compromising the quality of the solution produced by the solver method.

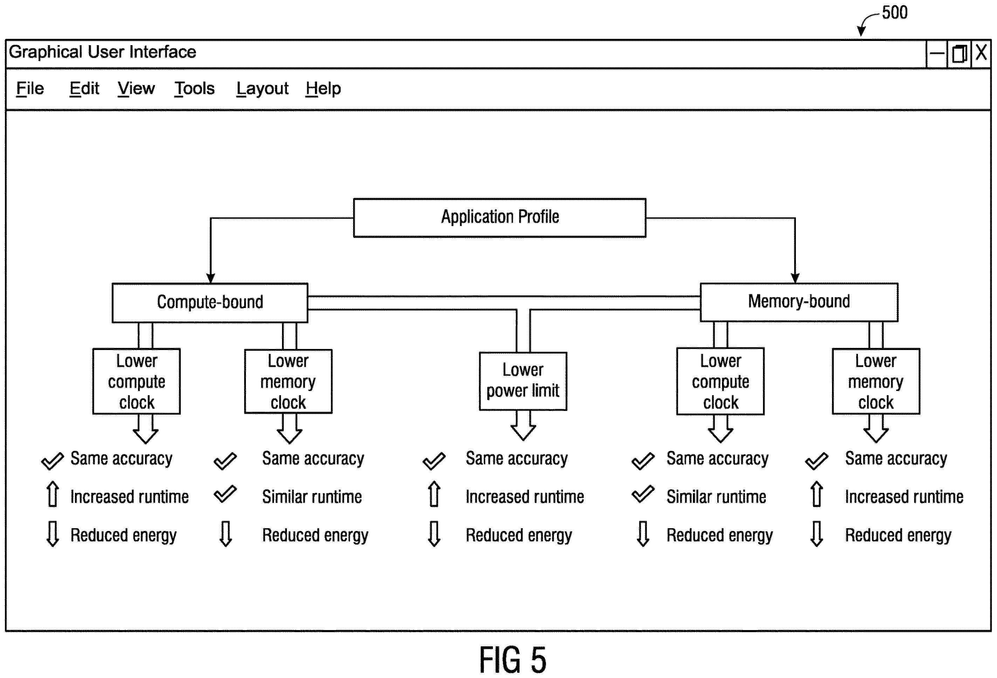

FIG 5 is a GUI 500 showing an exemplary flowchart listing different strategies for reducing compute and memory clock frequencies for compute-bound and memory-bound solvers. Such flowchart may be provided for reference of a user to support informed decision-making. As depicted, for a compute-bound application, lowering the compute clock can reduce energy consumption while maintaining accuracy, although with increased runtime. Lowering the memory clock for a compute-bound application can reduce energy consumption with similar runtime and accuracy. For memory-bound applications, lowering the compute clock can reduce energy with similar runtime, while lowering the memory clock reduces energy but increases runtime. In both cases, lowering the power limit reduces energy consumption but increases runtime. All these strategies maintain the same accuracy as the original configuration. This approach allows for accuracy-preserving optimizations tailored to the specific characteristics of the application. By adjusting hardware parameters based on whether the application is compute-bound or memory-bound, the method 100 can achieve further reductions in energy consumption while maintaining solution accuracy.

In present embodiments, the method 100 further enhances user control and optimization capabilities by incorporating additional steps focused on software and/or hardware parameters. This feature allows users to fine-tune the selected solver method-hardware platform pair for optimal performance. This approach recognizes that both software-level optimizations (such as algorithm-specific settings) and hardware-level adjustments (such as clock frequencies or power limits) can significantly impact solver performance. The method 100 systematically analyses and presents these impacts, enabling users to achieve a more precise balance between energy efficiency and solution speed according to their specific requirements and constraints.

In one embodiment, the method 100 incorporates additional steps to provide users with more detailed control over software parameters. The method 100 begins by providing an interface (such as, the interface 208) for the user to select a solver method-hardware platform pair from the set of non-dominated pairs. Once a selection is made, a set of software parameters associated with the chosen pair is identified. These software parameters are specific to the solver method and can significantly influence the performance of the solver. The software parameters may vary depending on the nature of the solver method but typically include settings that affect how the solver algorithm operates. The set of software parameters may include, but is not limited to, a preconditioner parameter, a precision level parameter, and a kernel launch parameter. The preconditioner parameter affects how the solver prepares the problem for solution, potentially improving convergence speed. The precision level parameter determines the numerical precision used in calculations, balancing accuracy against computational efficiency. The kernel launch parameter, particularly relevant for GPU implementations, controls how computational tasks are distributed across the hardware. The method 100, then, involves analysing how variations in these software parameters affect energy consumption and time-to-solution. This analysis involves running simulations or calculations for different configurations of the software parameters, always ensuring that the required solution accuracy is maintained. The results of this analysis, showing the trade-offs between energy consumption and time-to-solution for different software parameter settings, are then presented to the user via the interface. The user can then explore how adjusting various software parameters may optimize performance for their specific needs, whether prioritizing energy efficiency, speed, or a balance between the two.

In one embodiment, the method 100 incorporates additional steps to provide users with more detailed control over hardware parameters. The method 100 begins by providing an interface (such as, the interface 208) for the user to select a solver method-hardware platform pair from the set of non-dominated pairs. Once a selection is made, a set of hardware parameters associated with the chosen pair is identified. These hardware parameters may include, but are not limited to, the compute clock frequency, memory clock frequency, graphic clock frequency (if applicable), and thermal design power (TDP) of the hardware platform. The method 100 recognizes that varying these hardware parameters can result in different trade-offs between energy consumption and time-to-solution. The method 100, then, involves analysing how changes in the identified hardware parameters affect both energy consumption and time-to-solution. This analysis involves simulating or calculating the performance metrics for various configurations of the hardware parameters within their allowable ranges. The method 100 ensures that all considered variations maintain the required level of solution accuracy. After completing the analysis, the method 100 outputs the results via the interface. The results of this analysis, showing the trade-offs between energy consumption and time-to-solution for different hardware parameter settings, are then presented to the user via the interface. The user can explore how adjusting various hardware parameters might optimize performance for their specific needs, whether prioritizing energy efficiency, speed, or a balance between the two.

In an example implementation, after the selection of a specific solver method-hardware platform pair based on energy consumption and time-to-solution trade-offs, the method 100 involves identifying a set of software parameters and hardware parameters that can be further adjusted to optimize performance. These parameters allow for fine-tuning of the selected configuration to achieve the desired balance between energy efficiency and solution speed. For software parameters, the method 100 may involve identifying important solver-specific settings. Using a linear solver as an example, if the selected pair is BiCGStab-GPU, the method 100 may identify parameters such as the choice of preconditioner (e.g., Jacobi, Incomplete Cholesky), target precision (single or double), and kernel launch parameters (e.g., grid size, block size). The method 100, then, involves analysing and presents the effects of varying these parameters on energy consumption and time-to-solution, enabling the user to make informed choices based on their specific requirements. Similarly, for hardware parameters, the method 100 may involve identifying relevant settings that can be adjusted. These may include the memory clock frequency of the hardware, the compute frequency of the hardware, and the thermal design power (TDP). The method 100, then, involves analysing how changes in these hardware parameters affect energy consumption and time-to-solution, providing the user with additional optimization opportunities.

In some embodiments, the method 100 further extends its functionality by performing the executing, measuring, and analysing steps (steps 102-106) for a plurality of problem classes and problem sizes of solvers. In this context, "problem classes" refer to different categories or types of scientific problems that solvers may address, such as linear systems, differential equations, optimization problems, or machine learning tasks. Each problem class may have its own characteristics and requirements. "Problem sizes" refer to the scale or complexity of the problem within a given class, which can significantly affect computational requirements and solver performance. The method 100, then, includes generating a database of non-dominated solver method-hardware platform pairs for different combinations of problem classes and problem sizes. That is, the data generated from these repeated executions, measurements, and analyses is then used to construct a database (for example, implemented as the database 210). This database stores the non-dominated solver method-hardware platform pairs identified for each unique combination of problem class and problem size. The non-dominated pairs represent the optimal trade-offs between energy consumption and time-to-solution for a given scenario, ensuring that no other pair exists that is superior in both aspects while maintaining the required accuracy of the solver.

In a further embodiment, the present method 100 incorporates an analysis of energy consumption and time-to-solution for various combinations of solver methods, target hardware platforms, problem classes, and problem sizes. Herein for each combination, the solver is executed, the energy consumption and the time-to-solution are measured, and the set of non-dominated solver method-hardware platform pairs are determined. Such combinations with relevant details are then stored in the database. In particular, when an end-user specifies a particular problem class and problem size, the method 100 involves retrieving the corresponding set of non-dominated solver method-hardware platform pairs. These pairs represent the optimal trade-offs between energy consumption and time-to-solution for the given problem parameters. Furthermore, for each solver method-hardware platform pair, the method 100 involves providing an analysis of how changes in various parameters affect the energy consumption and time-to-solution. These parameters may include software-related factors such as algorithm-specific settings, precision levels, or convergence criteria, as well as hardware-related factors such as clock speeds or memory configurations.

In some embodiments, the method 100 also incorporates steps to utilise the generated database. Herein, the method 100 includes receiving a query from the user for a specific problem class and problem size. That is, when a user initiates a query for a specific problem class and problem size, the method 100 receives this query through an interface (such as, the interface 208). The query typically includes parameters that define the nature and scale of the scientific simulation the user intends to run. The method 100, then, involves searching the database for non-dominated solver method-hardware platform pairs corresponding to the query. After identifying the relevant non-dominated solver method-hardware platform pairs from the database, the method 100 involves providing the identified non-dominated solver method-hardware platform pairs to the user for selection. The presentation of these options may include relevant performance metrics, such as estimated energy consumption and time-to-solution for each pair, allowing the user to make an informed decision based on their specific priorities and constraints.

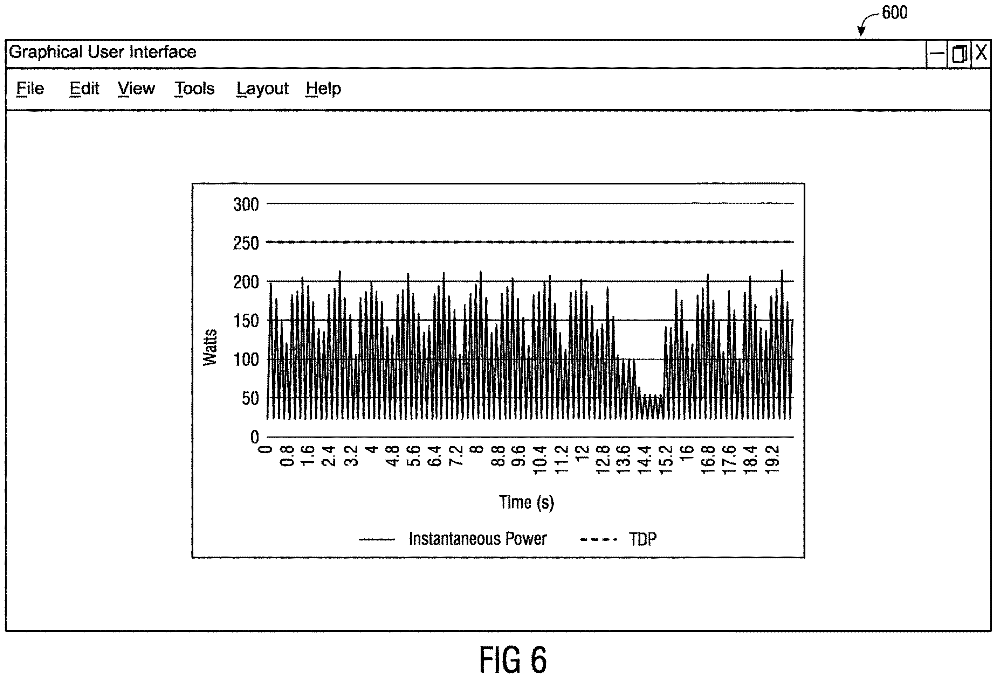

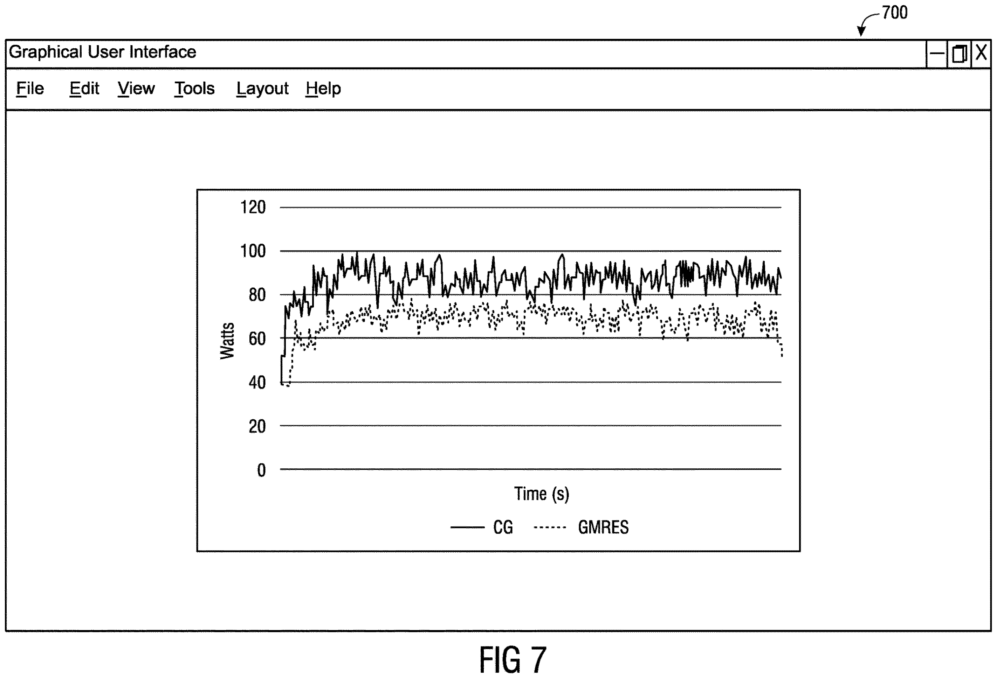

Referring now to FIG 6, illustrated is a GUI 600 showing a graph of an instantaneous power consumption versus thermal design power (TDP) for an example scientific application running on an NVIDIA V100 GPU. In the exemplary configuration, the GPU had a TDP of 250W (as represented by a dashed line in the graph). Further, area under curve (TDP curve) represented the total energy consumed by the GPU over a period of 20 seconds. Due to the deviation of the instantaneous power from the TDP, the area under the TDP curve, while easy to compute, was not a good estimate of the energy consumption of the application running on the GPU. Furthermore, the variation in computing patterns for different solvers led to vastly different power consumption curves. This has been demonstrated in FIG 7 which illustrates a GUI 700 showing a graph, where the instantaneous power consumption was plotted over time for solving a linear system from a benchmark circuit simulation problem using two different solvers, CG (Conjugate Gradient) and GMRES (Generalized Minimal Residual) which are iterative methods used to solve systems of linear equations and are common in scientific and engineering computations. It was observed that over the same time period, the energy consumption patterns were significantly different. Thus, it was concluded that the execution time and the TDP could not be considered as good estimates of the energy consumption of the application directly.

To corroborate the efficacy of the present invention, two benchmark applications were executed on an NVIDIA V100 GPU. An energy measurement approach was taken to measure the energy consumption of the benchmark applications on an NVIDIA GPU. An energy measurement module was used that obtained the instantaneous power consumption data from the NVIDIA Management Library (NVML) and multiplied by the time taken to measure the instantaneous energy. All such instantaneous energy measured over the execution time of the application was summed to obtain the energy consumed by the GPU. All energy measurements were run as a background process to ensure minimal overheads during the energy measurement. For the benchmark examples, the TDP and clock speed of Streaming Multiprocessor (SM) were manually modified using the utility provided by NVIDIA.

Herein, Benchmark 1 involved solving a linear system of equations resulting from a circuit simulation problem. The benchmark problem was a circuit simulation running on an NVIDIA GPU, using the Conjugate Gradient (CG) solver algorithm. During instrumentation of the application on different GPUs, it was found to be memory-bound on an NVIDIA K20 GPU, based on the high number of memory transactions. However, the same application was found to be compute-bound on an NVIDIA V100 due to the sufficiently high memory bandwidth which allowed for the memory transactions to be completed efficiently. It was noted that the NVIDIA V100 did not allow modification of the base clock speed of the memory, with the only supported base clock speed being 877 MHz. This limitation was observed to be true not only for the V100 but also for recent data centre class GPUs such as A100 (Ampere architecture) and H100 (Hopper architecture), where the base clock for both was 1593 MHz.

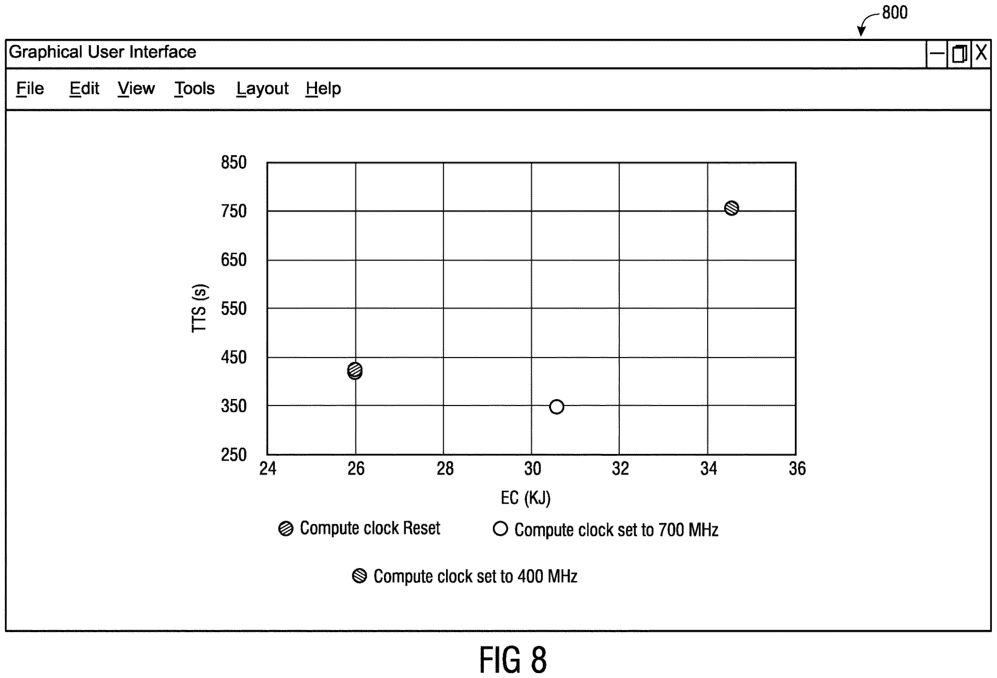

An experiment was conducted to confirm that lowering the compute clock of a compute-bound application could also reduce the energy consumption of the application at the cost of increasing its execution time. The results are presented in FIG 8 which illustrates a GUI 800 showing a graph providing an EC-TTS (Energy Consumption-Time-to-Solution) plot. From FIG 8, it may be found that the Reset compute clock and compute clock set to 700 MHz offered a trade-off between the EC and TTS. The configuration corresponding to Compute clock set to 400 MHz performed worse compared to both the other approaches in terms of both EC and TTS. Hence, it was concluded that given a particular Method-Target (M-T) pair (CG-GPU), there existed a set of non-dominated configurations related to the compute clock configurations of the GPU (Compute clock reset and at 700 MHz) for solving the Benchmark 1 application. It was further noted that since the same solver tolerance was used in all cases, the same level of accuracy was achieved in all configurations.

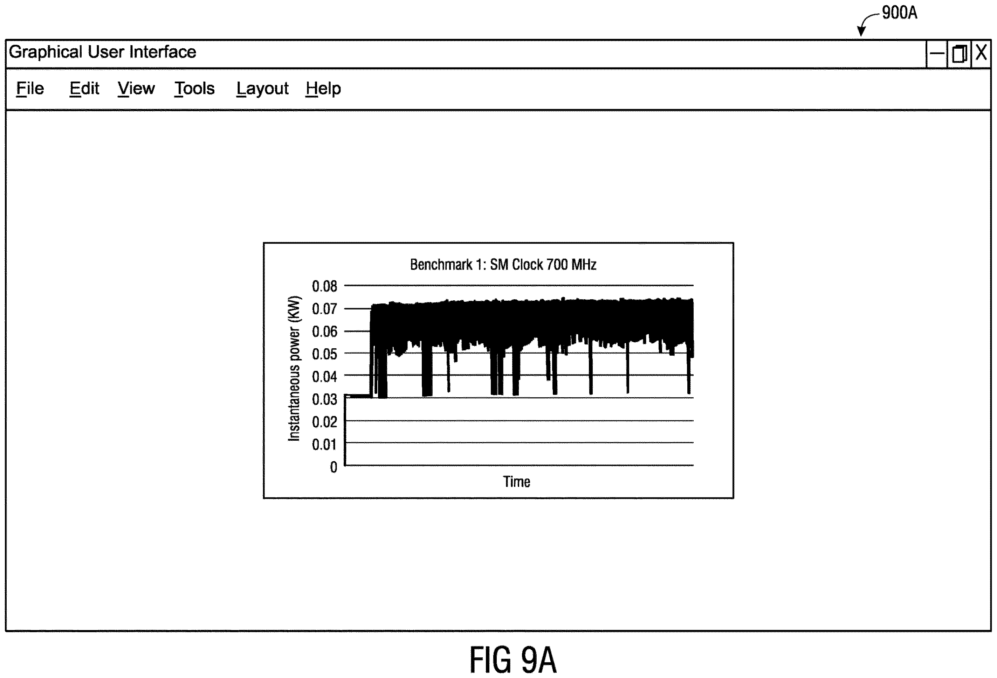

In particular, for the three configurations present in FIG 8, the corresponding instantaneous power draw plots are shown in GUIs 900A-900C of FIGS 9A-9C. It was observed that the maximum instantaneous power from the graph related to reset SM clock and the graph related to SM clock set at 700 MHz were approximately 100 watts and 70 watts respectively. As the reset clock configuration executed for a longer duration compared to the 700MHz configuration, there existed a trade-off. In the case of the configuration with 700 MHz, the maximum instantaneous power further dropped to 50 watts, but this increased the execution time greatly. As a result of the greatly increased execution time, any saving in the instantaneous power was compensated, and a sub-optimal configuration was obtained that consumed more energy than both the other configurations.

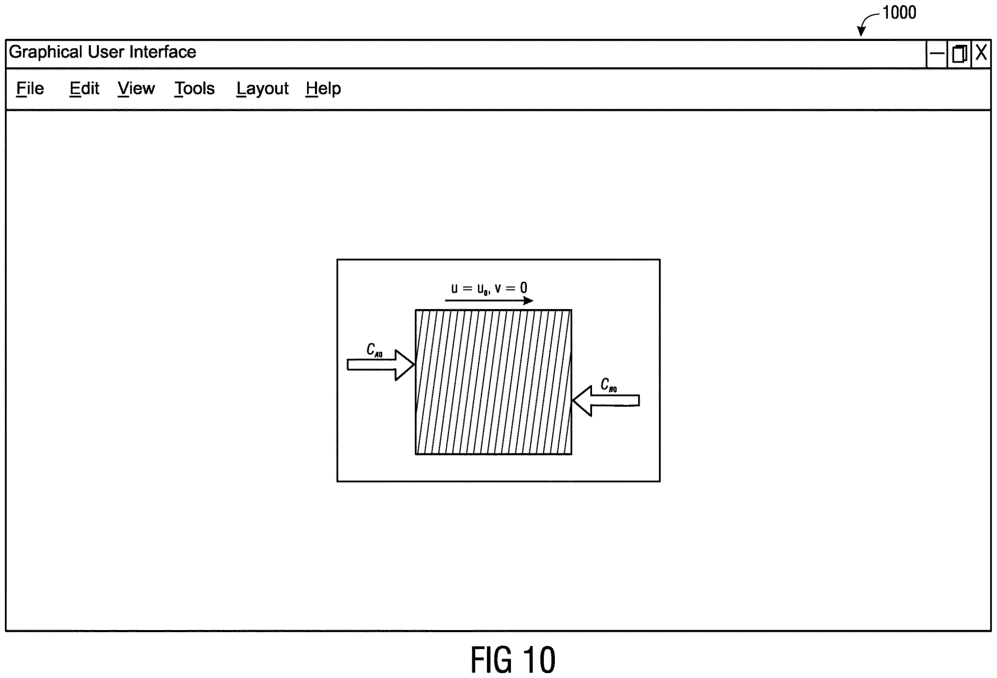

Further, Benchmark 2 involved a chemically reacting flow solver incorporating individual flow, pressure, and chemistry solvers. This benchmark considered a chemically reacting flow solver for simulating a reaction chamber for isothermal mixing of chemical components. The benchmark problem domain, as schematically represented in a GUI 1000 of FIG 10, involved two sets of reactants C_{A0} and C_{B0} being injected into a square reaction chamber for 10 seconds while the top lid moved at a constant speed. The application involved a flow solver, a pressure solver, and a chemistry solver, all executed on a V100 GPU. The time-to-solution (TTS) and energy consumption (EC) of the application were computed for a fixed number of time steps with different restrictions on the SM clock and the maximum TDP.

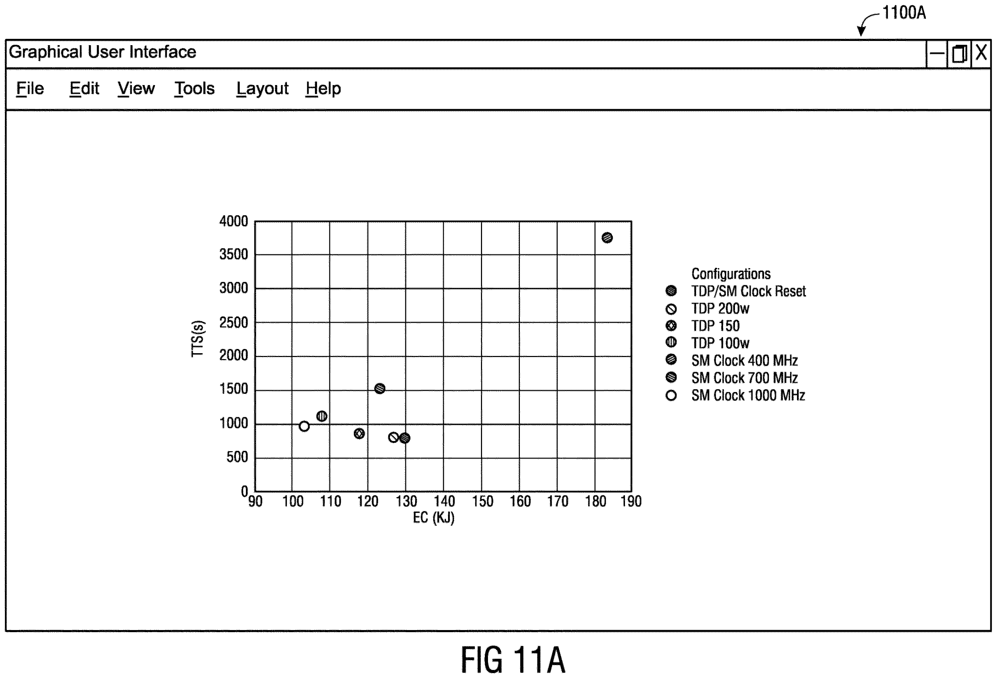

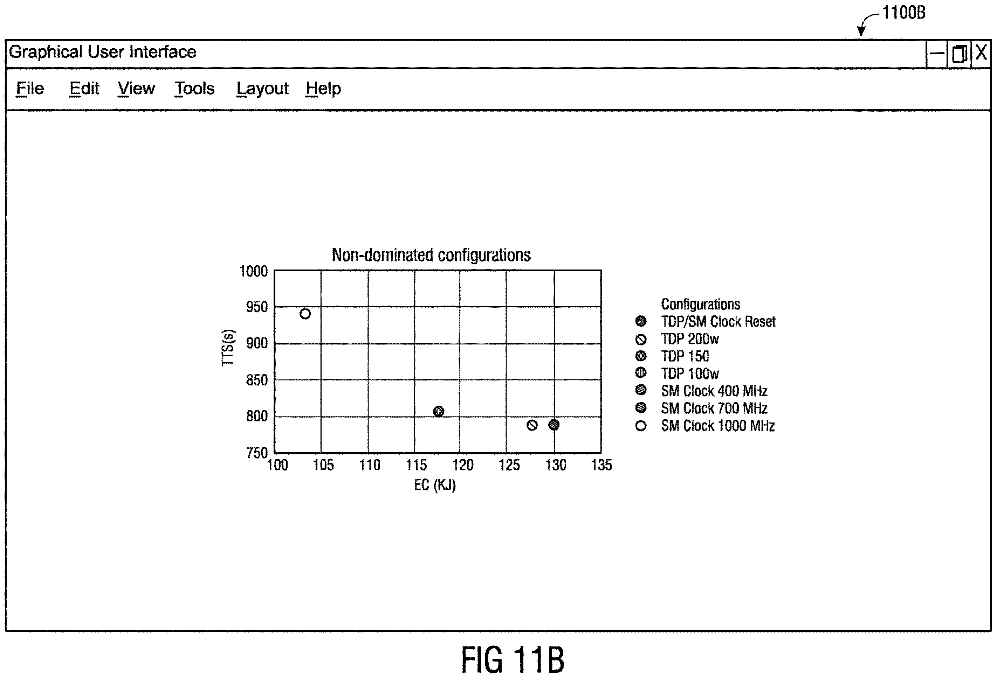

FIGS 11A-11B provide GUIs 1100A and 1100B, respectively, showing graphs depicting the different configurations considered and their corresponding positions on the EC-TTS plot for Benchmark 2. Of the seven configurations considered, the non-dominated set consisted of four configurations: (i) Reset TDP (TDP at the default value of 250W) and SM clock, (ii) SM clock at 1000 MHz, (iii) TDP at 150W, and (iv) TDP at 200W. The remaining configurations were identified as dominated and could be discarded. The four non-dominated configurations can be provided as options to the end-user, allowing them to select the suitable configuration based on their individual EC and TTS requirements.

Furthermore, two pairs of configurations from the non-dominated set were compared as examples:
1. SM clock @1000MHz vs. TDP @150W: Between these two non-dominated configurations, TDP @150W was faster than SM clock @1000MHz by a factor of 14.4%. However, the SM clock @1000MHz consumed 12.1% less energy compared to TDP @150W.
2. SM clock @1000MHz vs. TDP/SM reset: Between these two non-dominated configurations, TDP/SM reset was faster than SM clock @1000MHz by a factor of 16.1%. However, the SM clock @1000MHz consumed 20.4% less energy when compared to the TDP/SM reset.

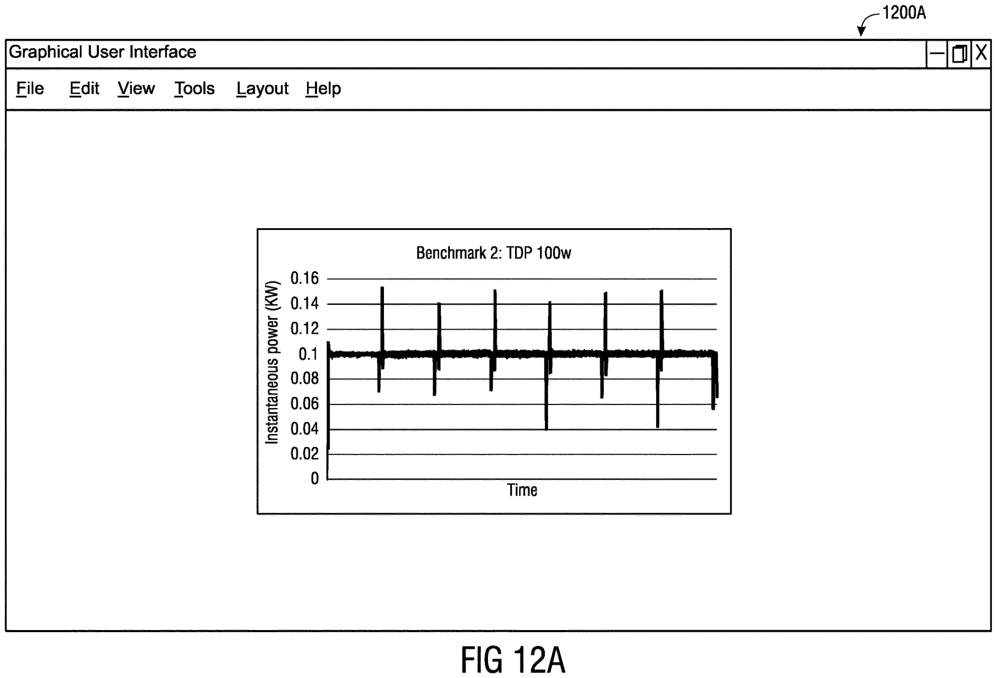

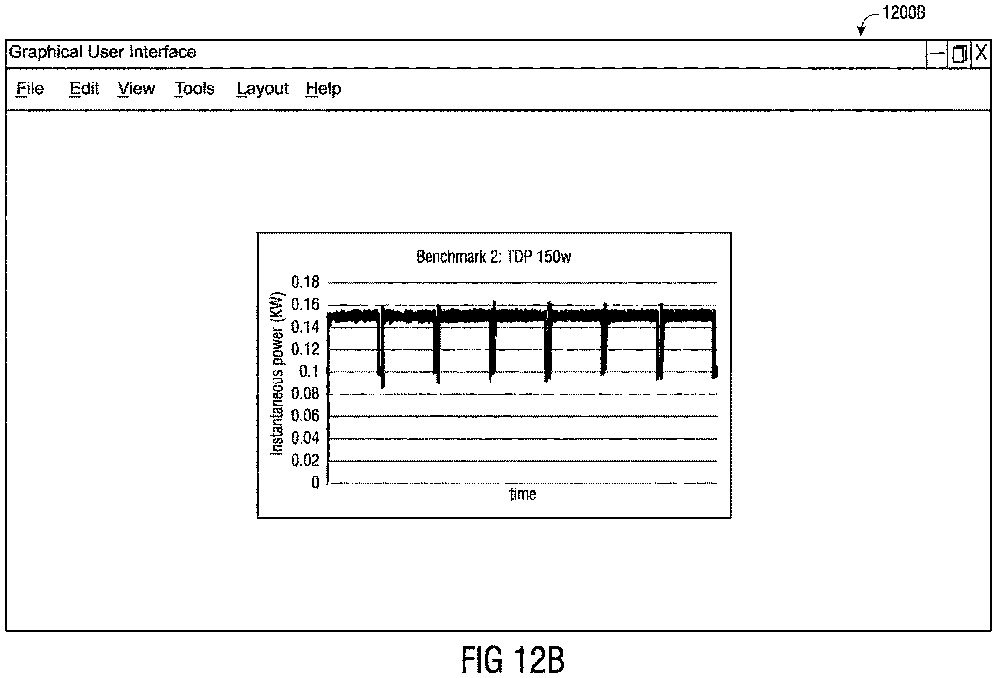

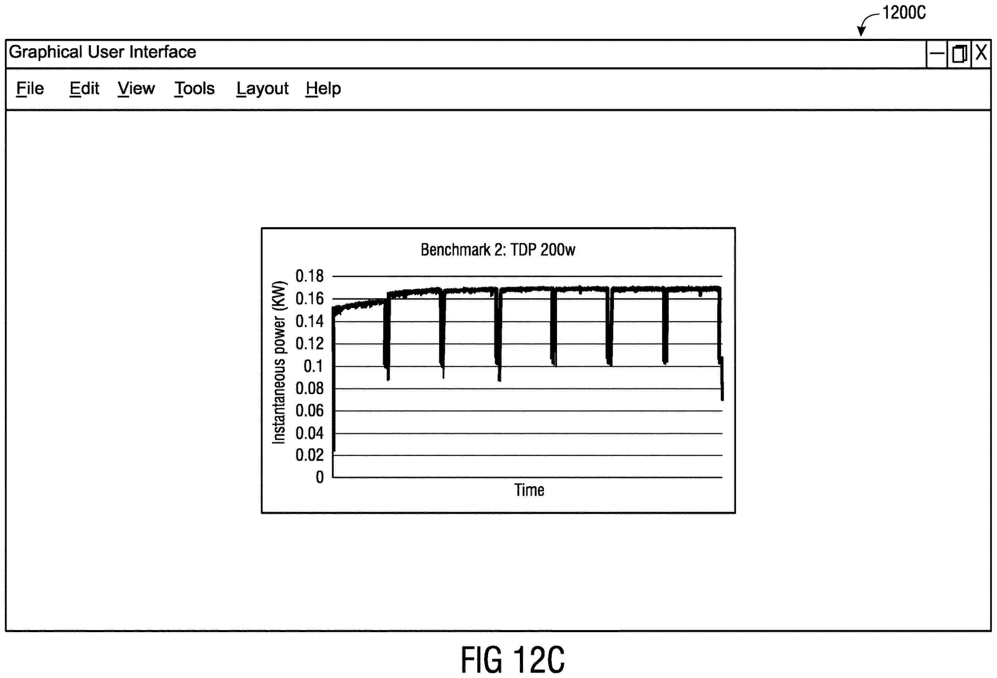

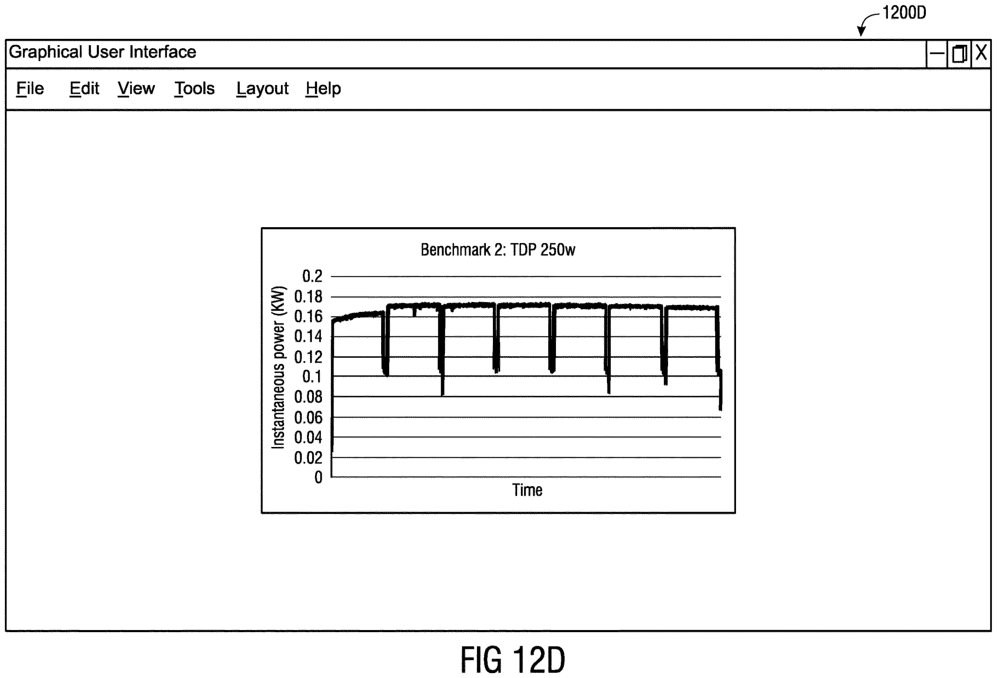

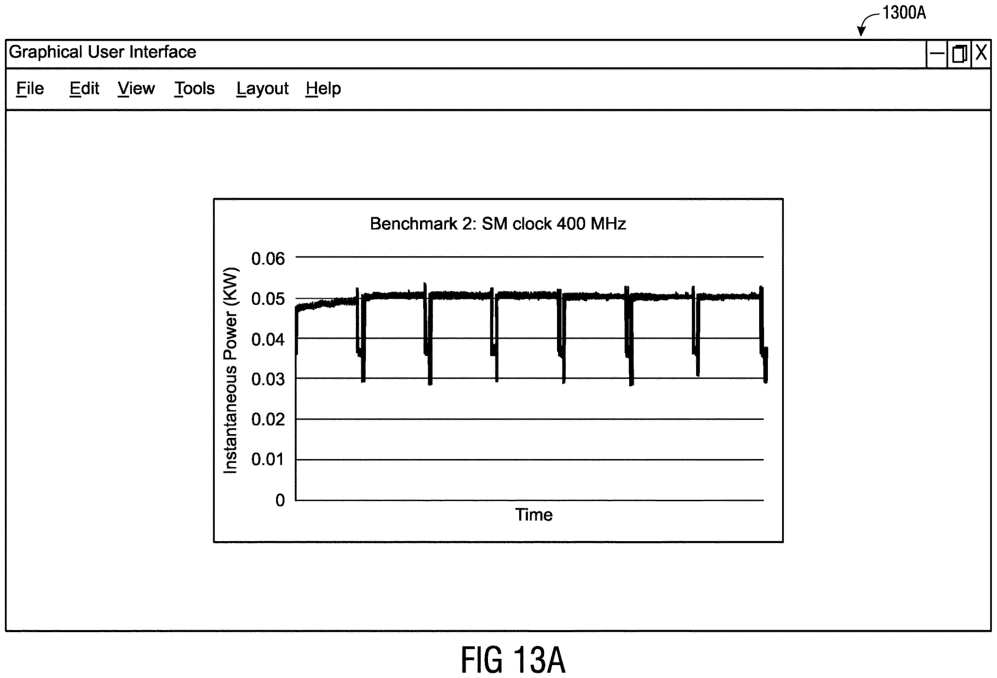

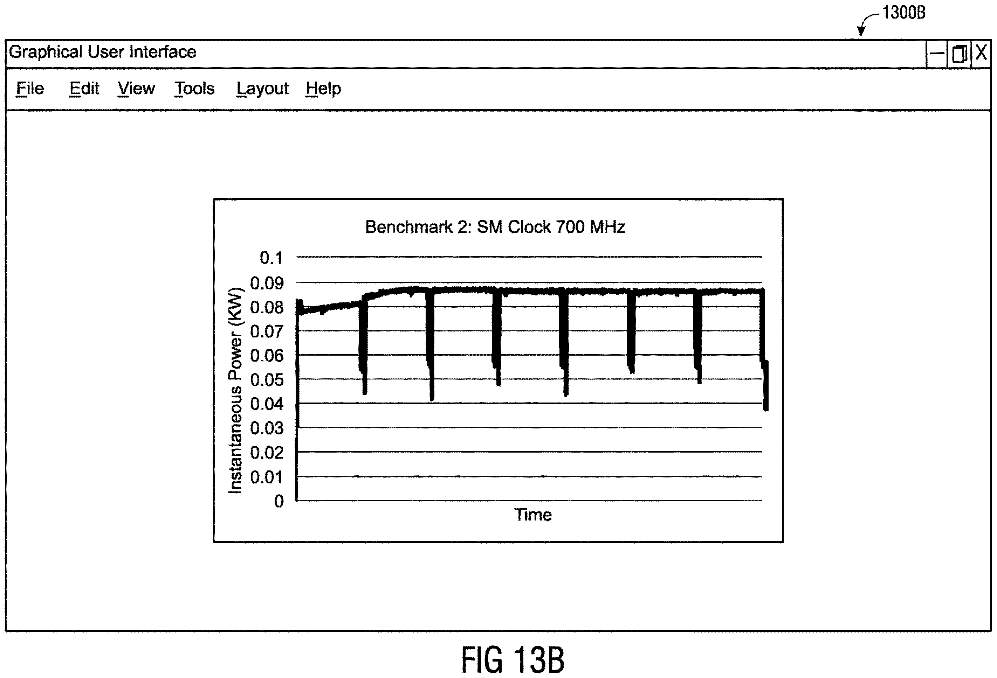

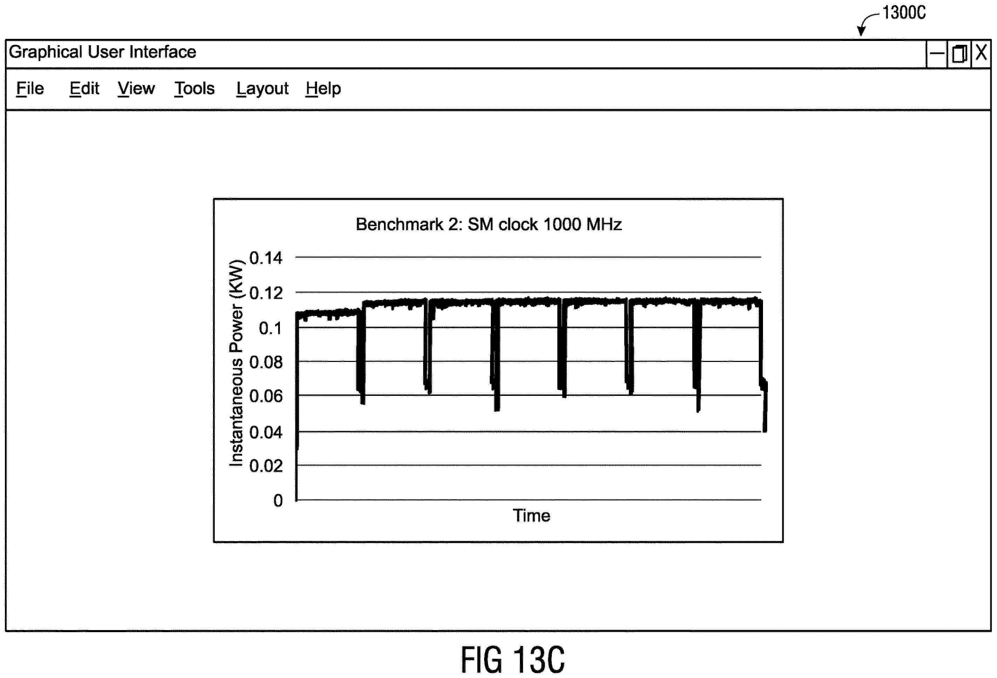

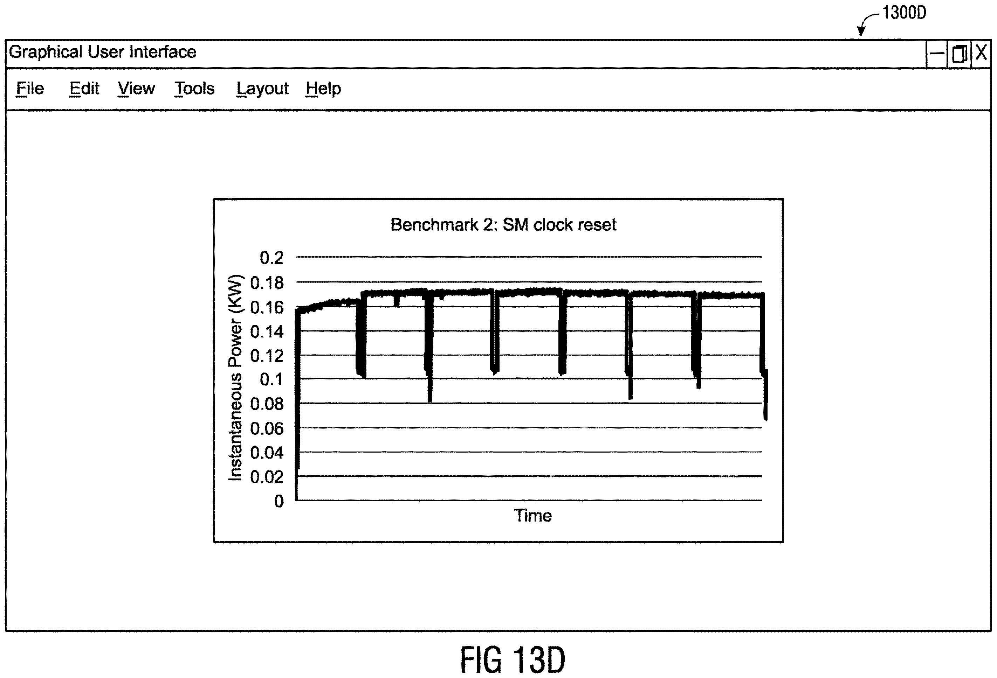

The instantaneous power graphs for different TDP configurations and different SM clock configurations are presented in graphs shown in GUIs 1200A-1200D of FIGS 12A-12D and GUIs 1300A-1300D of FIGS 13A-13D, respectively. These graphs provided visual representations of how the power consumption varied over time for different hardware configurations, further illustrating the trade-offs between energy consumption and time-to-solution for the chemically reacting flow solver benchmark.

These benchmark results demonstrated the efficacy of the method 100 of the present invention in identifying non-dominated configurations that offered optimal trade-offs between energy consumption and time-to-solution for different types of scientific computing problems. The proposed approach successfully identified configurations that could significantly reduce energy consumption while maintaining acceptable performance, or configurations that offered improved performance with moderate increases in energy consumption, allowing users to choose based on their specific priorities and constraints. The benchmark results provided empirical evidence supporting the proposed approach for managing energy consumption and time-to-solution in scientific simulations. The experiments demonstrated that the relationship between hardware configurations, energy consumption, and execution time is complex and problem-dependent.

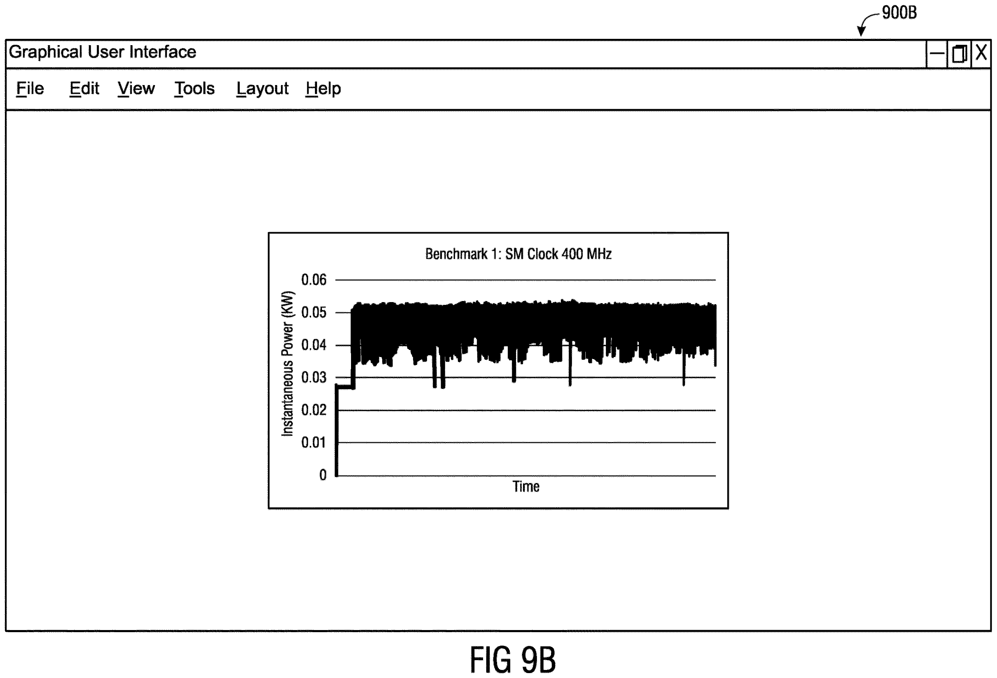

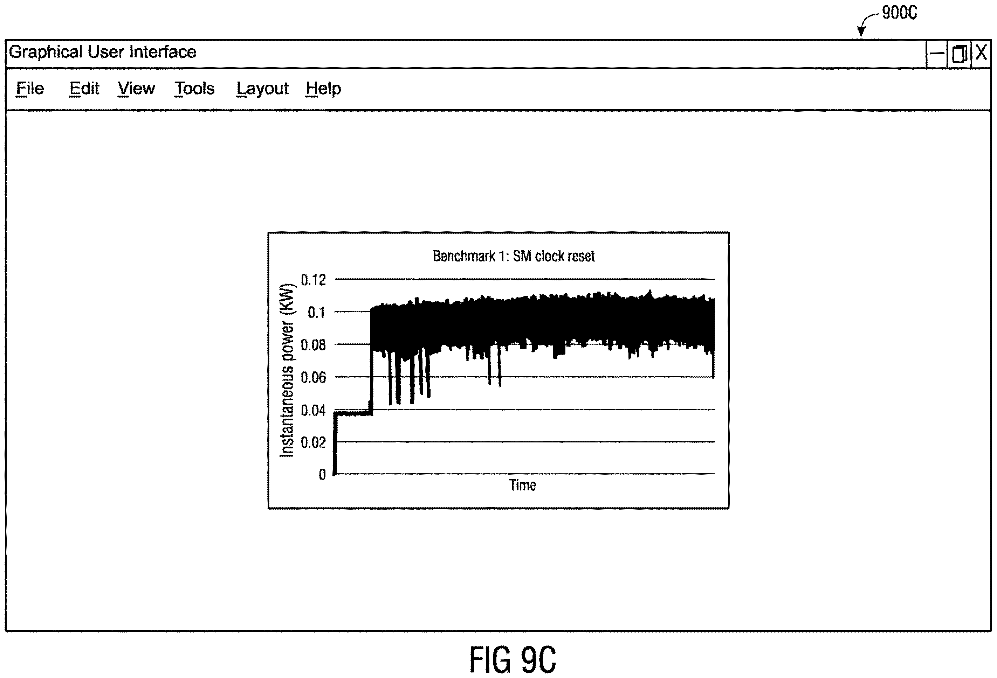

Specifically for Benchmark 1, the linear system solver, the results showed that lowering the compute clock of a compute-bound application could indeed reduce energy consumption, although at the cost of increased execution time. This finding validated that there exist non-dominated configurations related to compute clock settings that can optimize the trade-off between energy consumption and time-to-solution. Benchmark 2, the chemically reacting flow solver, further illustrated the multifaceted nature of the optimization problem. The non-dominated set of configurations included variations in both SM clock speeds and TDP settings, highlighting the importance of considering multiple hardware parameters in the optimization process. The significant differences in energy consumption and execution time between these configurations (up to 20.4% difference in energy consumption and 16.1% difference in speed) proved the potential impact of choosing the appropriate configuration. These benchmarks also demonstrated the importance of instantaneous power measurements over relying solely on TDP values. The instantaneous power graphs (FIGS 9, 12, and 13) showed that actual power consumption can vary significantly from the TDP, and that different solver methods can have markedly different power consumption patterns even when solving the same problem.

The experiments highlighted the capability of the method 100 of the present invention to identify and present non-dominated configurations to end-users. This feature allows users to make informed decisions based on their specific requirements, whether prioritizing energy efficiency, solution speed, or a balance between the two. The benchmarks also revealed hardware-specific considerations that were taken into account. For instance, the observation that newer GPU models (like V100, A100, and H100) do not allow modification of the base memory clock speed is an important constraint incorporated into optimization strategy. Overall, these benchmark results validated the proposed approach of analysis of solver methods, hardware platforms, and their configurations to identify optimal trade-offs between energy consumption and time-to-solution.

The method 100 of the present invention provides a comprehensive approach to managing energy consumption and time-to-solution in the execution of solvers for scientific simulations. Unlike prior solutions that focus primarily on reducing energy requirements of particular solvers through isolated software or hardware optimizations, the method 100 incorporates a detailed analysis of solver methods, hardware platforms, problem classes, and problem sizes. While existing solutions often suggest dynamic voltage and frequency scaling (DVFS) to reduce energy consumption, the method 100 is limited in its applicability to recent data centre class GPUs that do not allow modification of memory frequency for compute-bound workloads. In contrast, the method 100 can achieve energy reduction even on hardware where memory clock speeds cannot be adjusted, by optimizing other parameters such as compute clock frequency and thermal design power. Furthermore, the method 100 considers end-to-end scientific simulation software.

The method 100 provides users with an energy consumption versus time-to-solution (EC-TTS) graph for selected solver method-hardware platform pairs, offering a level of insight and control not available in existing solutions. The method 100 provides options for users to choose energy-efficient solvers on specific target hardware, considering the trade-offs between energy consumption and time-to-solution when suggesting these options. Additionally, the method 100 presents a non-dominated set of configurations based on both software and hardware parameters, allowing users to select parameters that align with their priorities, whether they prefer faster time-to-solution or lower energy consumption. This flexibility and comprehensive approach enable more efficient utilization of computational resources in scientific simulations, potentially leading to reduced energy costs and improved performance across a wide range of problem types and sizes.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Reference Numerals**

| | |
|---|---|
| method | 100 |
| step | 102 |
| step | 104 |
| step | 106 |
| step | 108 |
| system | 200 |
| bus | 202 |
| processing unit | 204 |
| memory unit | 206 |
| interface | 208 |
| database | 210 |
| input device | 212 |
| output device | 214 |
| solver optimization module | 216 |
| graphical user interface | 300 |
| method pool | 302 |
| graph | 304 |
| graphical user interface | 400 |
| two-dimensional graph | 402 |
| first region | 404 |
| second region | 406 |
| graphical user interface | 500 |
| graphical user interface | 600 |
| graphical user interface | 700 |
| graphical user interface | 800 |
| graphical user interface | 900A |
| graphical user interface | 900B |
| graphical user interface | 900C |
| graphical user interface | 1000 |
| graphical user interface | 1100A |
| graphical user interface | 1100B |
| graphical user interface | 1200A |
| graphical user interface | 1200B |
| graphical user interface | 1200C |
| graphical user interface | 1200D |
| graphical user interface | 1300A |
| graphical user interface | 1300B |
| graphical user interface | 1300C |
| graphical user interface | 1300D |

## Claims

1. A computer-implemented method (100) for managing energy consumption and time-to-solution in execution of solvers, the method (100) comprising implementing a processing unit (204) for:
(i) executing a solver using a solver method on a hardware platform;
(ii) measuring energy consumption and time-to-solution of the solver method on the hardware platform during execution of the solver;
(iii) determining a set of non-dominated solver method-hardware platform pairs based on the measured energy consumption and time-to-solution, wherein each non-dominated solver method-hardware platform pair represents a trade-off between minimizing energy consumption and minimizing time-to-solution without affecting accuracy of the solver; and
(iv) configuring the hardware platform to execute the solver using one of the solver method-hardware platform pairs from the non-dominated solver method-hardware platform pairs.

2. The method (100) according to claim 1, wherein determining the set of non-dominated solver method-hardware platform pairs comprises:
identifying a set of applicable solver methods from a plurality of solver methods based on the solver to be executed;
plotting the measured energy consumption and time-to-solution for each applicable solver method when executed on the hardware platform;
identifying a set of dominated solver method-hardware platform pairs, wherein each dominated solver method-hardware platform pair has higher energy consumption and higher time-to-solution than at least one other solver method-hardware platform pair; and
identifying the solver method-hardware platform pairs excluding the set of dominated solver method-hardware platform pairs as the set of non-dominated solver method-hardware platform pairs.

3. The method (100) according to any of the preceding claims, further comprising:
providing an interface (208) to receive, from a user, a selection of a solver method-hardware platform pair from the set of non-dominated solver method-hardware platform pairs;
identifying, by the processing unit (204), a set of software parameters associated with the selected solver method-hardware platform pair, wherein varying the set of software parameters results in different energy consumption and time-to-solution trade-offs; and
outputting, via the interface (208), the different energy consumption and time-to-solution trade-offs corresponding to the set of software parameters.

4. The method (100) according to any of the preceding claims, further comprising:
providing an interface (208) to receive, from a user, a selection of a solver method-hardware platform pair from the set of non-dominated solver method-hardware platform pairs;
identifying, by the processing unit (204), a set of hardware parameters associated with the selected solver method-hardware platform pair, wherein varying the set of hardware parameters results in different energy consumption and time-to-solution trade-offs; and
outputting, via the interface (208), the different energy consumption and time-to-solution trade-offs corresponding to the set of hardware parameters.

5. The method (100) according to any of the preceding claims, further comprising implementing the processing unit (204) for:
classifying the solver method as one of compute-bound and memory-bound based on one or more of compute and memory access patterns during execution of the solver while using thereof; and
recommending adjusting at least one of compute clock frequency, memory clock frequency, graphic clock frequency and thermal design power (TDP) based on the classification of the solver method.

6. The method (100) according to any of the preceding claims, further comprising implementing the processing unit (204) for:
performing the steps (i) to (iii) for a plurality of problem classes and problem sizes of solvers; and
generating a database (210) of non-dominated solver method-hardware platform pairs for different combinations of problem classes and problem sizes.

7. The method (100) according to any of the preceding claims, wherein the hardware platforms comprise at least one of a central processing unit (204) (CPU), a graphics processing unit (204) (GPU), a field-programmable gate array (FPGA), and an application-specific integrated circuit (ASIC).

8. The method (100) according to any of the preceding claims, further comprising presenting the set of non-dominated solver method-hardware platform pairs along with the energy consumption and time-to-solution data in a graphical format.

9. A system (200) comprising:
one or more processing units (204); and
a memory unit (206) communicatively coupled to the one or more processing units (204), wherein the memory unit (206) comprises a solver optimization module (216) stored in the form of machine-readable instructions executable by the one or more processing units (204), wherein the solver optimization module (216) is configured to perform method (100) steps for managing energy consumption and time-to-solution in execution of solvers, according to any of the claims 1 to 8.

10. A computer-program product having machine-readable instructions stored therein, which when executed by one or more processing units (204), cause the one or more processing units (204) to perform a method (100) according to any of the claims 1 to 8.
